# EUROPEAN PATENT APPLICATION

(11) **EP 3 960 514 A1**
(43) Veröffentlichungstag der Anmeldung: **02.03.2022**
(21) Anmeldenummer: 19926546.3
(22) Anmeldetag: 26.04.2019
(51) Int. Cl.: B60K 6/40, B60K 6/38

(54) **MODULARER ÜBERTRAGUNGSMECHANISMUS FÜR HYBRIDLEISTUNGSSYSTEM UND HYBRIDLEISTUNGSSYSTEM**

(71) Anmelder: Schaeffler Technologies AG & Co. KG, 91074 Herzogenaurach (DE)
(72) Erfinder: ZHANG, Chunzu, Shanghai 201804 (CN)
(86) Internationale Anmeldenummer: PCT/CN2019/084535
(87) Internationale Veröffentlichungsnummer: WO 2020/215309

(57) **Zusammenfassung**

Die vorliegende Erfindung stellt einen modularen Getriebemechanismus für ein Hybridantriebssystem und ein Hybridantriebssystem bereit; in dem modularen Getriebemechanismus sind ein Motor, eine Rotorträgeranordnung, eine Kupplung, ein konzentrischer Nehmerzylinder und eine Motorausgangswelle integriert. Einerseits ermöglicht der modulare Getriebemechanismus, dass eine Eingangs-/Ausgangshalterung der Kupplung in Antriebskopplung mit der Motorausgangswelle steht und dass die Rotorträgeranordnung in Antriebskopplung mit einer Eingangswelle eines Getriebes steht; andererseits ermöglicht der modulare Getriebemechanismus, dass die Eingangs-/Ausgangshalterung der Kupplung in Antriebskopplung mit der Eingangswelle des Getriebes steht und die Rotorträgeranordnung in Antriebskopplung mit der Motorausgangswelle steht. Auf diese Weise kann der modulare Getriebemechanismus gemäß der vorliegenden Erfindung eine Umwandlung des Hybridantriebssystems zwischen einer P1-Architektur und einer P2-Architektur nur durch einfache Anpassung an die Struktur umsetzen, wodurch die Forschungs- und Entwicklungskosten und der Aufwand, die durch separates Entwickeln der P1-Architektur und der P2-Architektur verbraucht werden, verringert werden.

## Beschreibung

### Technisches Gebiet

Die vorliegende Erfindung betrifft ein Hybridfahrzeug und insbesondere einen modularen Getriebemechanismus für ein Hybridantriebssystem eines Fahrzeugs sowie ein den Getriebemechanismus umfassendes Hybridantriebssystem.

### Hintergrund

Gegenwärtig sind in einem bestehenden Doppelmotor-Hybridantriebssystem für ein Fahrzeug Doppelmotoren üblicherweise an unterschiedlichen Positionen des Hybridantriebssystems angeordnet, sodass das Hybridantriebssystem unterschiedliche Architekturen aufweist.

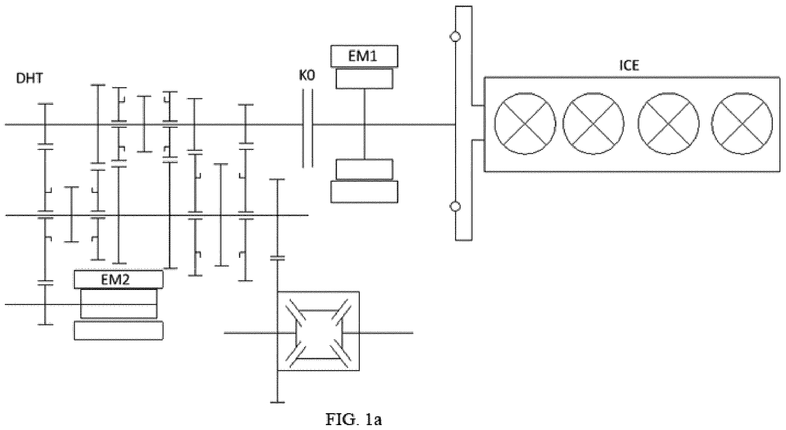

Wie in FIG. 1a dargestellt, ist in einem Doppelmotor-Hybridantriebssystem eine Ausgangswelle eines Verbrennungsmotors ICE direkt mit einer Eingangs-/Ausgangswelle eines ersten Motors EM1 verbunden, wobei die Eingangs-/Ausgangswelle des ersten Motors EM1 mit einer Eingangswelle eines Getriebes DHT mittels Eingriff einer Kupplung K0 in Antriebskopplung stehen kann, und eine Eingangs-/Ausgangswelle eines zweiten Motors EM2 mittels eines Zahnradpaares mit einer Ausgangswelle des Getriebes DHT in Antriebskopplung steht. Auf diese Weise weist das Hybridantriebssystem eine P1-Architektur (entsprechend einer Position des ersten Motors EM1) und eine P3-Architektur (entsprechend einer Position des zweiten Motors EM2) auf.

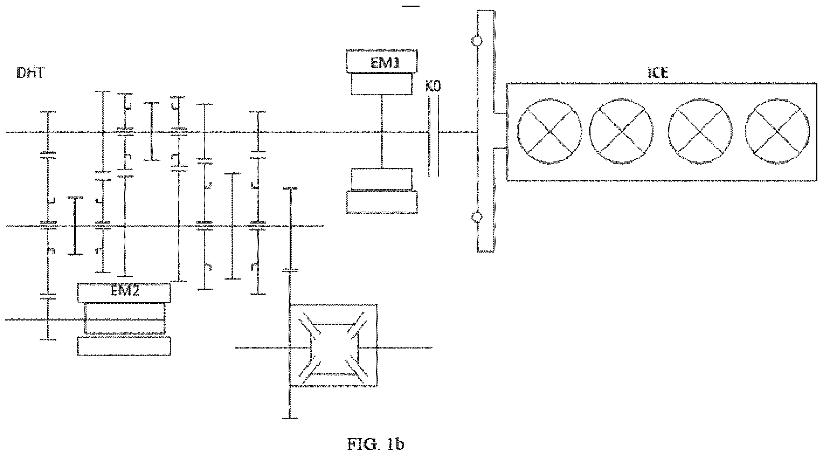

Wie in FIG. 1b dargestellt, kann in einem weiteren Doppelmotor-Hybridantriebssystem eine Ausgangswelle eines Verbrennungsmotors ICE mittels Eingriff einer Kupplung K0 mit einer Eingangs-/Ausgangswelle eines ersten Motors EM1 in Antriebskopplung stehen, wobei die Eingangs-/Ausgangswelle des ersten Motors EM1 direkt mit der Eingangswelle des Getriebes DHT verbunden ist, und die Eingangs-/Ausgangswelle des zweiten Motors EM2 mittels des Zahnradpaares in Antriebskopplung mit der Ausgangswelle des Getriebes DHT steht. Auf diese Weise implementiert das Hybridantriebssystem eine P2-Architektur (entsprechend einer Position des ersten Motors EM1) und eine P3-Architektur (entsprechend einer Position des zweiten Motors EM2).

Da der erste Motor EM1 in unterschiedlichen Positionen angeordnet ist, muss bei den zwei vorstehend erwähnten, häufig verwendeten Doppelmotor-Hybridantriebssystemen für gewöhnlich ein Kraftübertragungsmechanismus entsprechend der P1-Architektur und der P2-Architektur separat konstruiert werden, was die Forschungs- und Entwicklungskosten und den Aufwand erheblich erhöht.

### Kurzdarstellunq

Die vorliegende Erfindung wurde im Hinblick auf die vorstehend beschriebenen Mängel des Standes der Technik erarbeitet. Eine Aufgabe der vorliegenden Erfindung besteht darin, einen neuartigen modularen Getriebemechanismus für ein Hybridantriebssystem bereitzustellen. Der modulare Getriebemechanismus kann leicht eine P1-Architektur und eine P2-Architektur in dem Hybridantriebssystem implementieren, wodurch die Forschungs- und Entwicklungskosten und der Aufwand verringert werden, die durch getrennte Entwicklung im vorstehend erwähnten Stand der Technik verbraucht werden. Eine weitere Aufgabe der vorliegenden Erfindung besteht darin, ein Hybridantriebssystem bereitzustellen, das den modularen Getriebemechanismus umfasst.

Um die vorstehend erwähnten Aufgaben zu erfüllen, werden im Rahmen der vorliegenden Erfindung die nachfolgenden technischen Lösungen angewandt.

Die vorliegende Erfindung stellt einen modularen Getriebemechanismus für ein Hybridantriebssystem wie folgt bereit, umfassend:
einen Motor, umfassend einen Stator und einen Rotor, der sich auf einer radialen Innenseite des Stators befindet und in der Lage ist, sich relativ zum Stator zu drehen;
eine Rotorträgeranordnung, die fest mit dem Rotor verbunden ist, und sich auf einer radialen Innenseite des Rotors befindet;
eine Kupplung, die sich auf der radialen Innenseite des Rotors befindet, und umfassend eine Vielzahl von Druckplatten, eine Vielzahl von Reibscheiben und eine Eingangs-/Ausgangshalterung, wobei die Vielzahl von Druckplatten in der Lage ist, die Vielzahl von Reibscheiben in Eingriff zu nehmen, um die Rotorträgeranordnung in die Lage zu versetzen, in Antriebskopplung mit der Eingangs-/Ausgangshalterung zu stehen;
einen konzentrischen Nehmerzylinder, der einstückig relativ zum Stator befestigt ist, und umfassend einen Kolben, wobei der Kolben in der Lage ist, Druck auf die Druckplatte auszuüben, um die Vielzahl von Reibscheiben in die Lage zu versetzen, miteinander in Eingriff zu stehen;
eine Motorausgangswelle, die sich auf radialen Innenseiten sowohl des konzentrischen Nehmerzylinders als auch der Rotorträgeranordnung befindet; und eine Ausgangsanordnung,
wobei die Motorausgangswelle mit der Eingangs-/Ausgangshalterung verbunden ist, und die Ausgangsanordnung mit der Rotorträgeranordnung verbunden ist; oder die Motorausgangswelle mit der Rotorträgeranordnung verbunden ist, und die Ausgangsanordnung mit der Eingangs-/Ausgangshalterung verbunden ist.
Vorzugsweise umfasst die Rotorträgeranordnung eine Rotorhalterung und einen Rotorflansch, die Rotorhalterung ist fest mit dem Rotor verbunden, der Rotorflansch befindet sich auf einer radialen Innenseite der Rotorhalterung und ist mit der Rotorhalterung fest verbunden, und die Kupplung befindet sich zwischen der Rotorhalterung und dem Rotorflansch.

Besonders bevorzugt umfasst der Rotorflansch einen sich in radialer Richtung erstreckenden radialen Rotorflanschabschnitt, der sich in einer radialen Richtung erstreckt, und einen axialen Rotorflanschabschnitt, der sich von einem radialen Innenseitenende des radialen Rotorflanschschnitts in Richtung einer axialen Seite erstreckt, die Kupplung befindet sich auf einer radialen Außenseite des radialen Rotorflanschabschnitts, und die Vielzahl von Druckplatten steht in einer Umfangsrichtung mit dem axialen Rotorflanschabschnitt in Antriebskopplung. Besonders bevorzugt ist der axiale Rotorflanschabschnitt ferner mit einem axialen Anschlag versehen, und der axiale Anschlag befindet sich in einer Position auf einer axialen Seite der Druckplatte, die einer axialen Seite unter der Vielzahl von Druckplatten am nächsten ist.

Besonders bevorzugt ist die Masse von mindestens einer Druckplatte, die sich in der Mitte der Vielzahl von Druckplatten befindet, größer als die der anderen Druckplatten. Besonders bevorzugt befindet sich ein Teil eines Zylinderkörpers des konzentrischen Nehmerzylinders auf der radialen Innenseite des axialen Rotorflanschabschnitts, und der modulare Getriebemechanismus umfasst mindestens ein Lager, das sich zwischen dem axialen Rotorflanschabschnitt und dem Zylinderkörper befindet, und mindestens zwei Lager, die sich zwischen dem Zylinderkörper und der Motorausgangswelle befinden.

Besonders bevorzugt umfasst der modulare Getriebemechanismus ferner ein Gehäuse, wobei das Gehäuse relativ zu einem Motor des Hybridantriebssystems befestigt ist,
das Gehäuse umfasst einen sich in radialer Richtung erstreckenden radialen Gehäuseabschnitt und einen ersten axialen Gehäuseabschnitt und einen zweiten axialen Gehäuseabschnitt, der sich von einem radialen Außenseitenende des radialen Gehäuseabschnitts jeweils in Richtung der anderen axialen Seite und einer axialen Seite erstreckt, und
der Zylinderkörper des konzentrischen Nehmerzylinders ist auf dem radialen Gehäuseabschnitt befestigt, und der Motor befindet sich auf einer radialen Innenseite des zweiten axialen Gehäuseabschnitts.

Besonders bevorzugt umfasst der modulare Getriebemechanismus ferner einen Kühlmantel, wobei der Kühlmantel sich auf der radialen Innenseite des zweiten axialen Gehäuseabschnitts befindet und am zweiten axialen Gehäuseabschnitt befestigt ist, und der Stator sich auf einer radialen Innenseite des Kühlmantels befindet und am Kühlmantel befestigt ist.

Die vorliegende Erfindung stellt ferner ein Hybridantriebssystem wie folgt bereit, umfassend:
einen Motor in Antriebskopplung mit der Motorausgangswelle;
ein Getriebe, umfassend eine Getriebeeingangswelle; und
den modularen Getriebemechanismus für ein Hybridantriebssystem nach einer der vorstehend erwähnten technischen Lösungen,
wobei die Motorausgangswelle fest mit der Eingangs-/Ausgangshalterung verbunden ist, und die Rotorträgeranordnung mittels der Ausgangsanordnung mit der Getriebeeingangswelle in Antriebskopplung steht.

Die vorliegende Erfindung stellt ferner ein Hybridantriebssystem wie folgt bereit, umfassend:
einen Motor in Antriebskopplung mit der Motorausgangswelle;
ein Getriebe, umfassend eine Getriebeeingangswelle; und
den modularen Getriebemechanismus für ein Hybridantriebssystem nach einer der vorstehend erwähnten technischen Lösungen,
wobei die Motorausgangswelle fest mit der Rotorträgeranordnung verbunden ist, und die Eingangs-/Ausgangshalterung mittels der Ausgangsanordnung mit der Getriebeeingangswelle in Antriebskopplung steht.

Durch Anwenden der vorstehend erwähnten technischen Lösungen stellt die vorliegende Erfindung einen neuartigen modularen Getriebemechanismus für ein Hybridantriebssystem und ein den modularen Getriebemechanismus umfassendes Hybridantriebssystem bereit. In dem modularen Getriebemechanismus sind ein Motor, eine Rotorträgeranordnung, eine Kupplung, ein konzentrischer Nehmerzylinder und eine Motorausgangswelle integriert. Einerseits ermöglicht der modulare Getriebemechanismus, dass eine Eingangs-/Ausgangshalterung der Kupplung in Antriebskopplung mit der Motorausgangswelle steht und dass die Rotorträgeranordnung in Antriebskopplung mit einer Eingangswelle eines Getriebes steht; andererseits ermöglicht der modulare Getriebemechanismus, dass die Eingangs-/Ausgangshalterung der Kupplung in Antriebskopplung mit der Eingangswelle des Getriebes steht und die Rotorträgeranordnung in Antriebskopplung mit der Motorausgangswelle steht. Auf diese Weise kann der modulare Getriebemechanismus gemäß der vorliegenden Erfindung eine Umwandlung des Hybridantriebssystems zwischen einer P1-Architektur und einer P2-Architektur nur durch einfache Anpassung an die Struktur umsetzen, wodurch die Forschungs- und Entwicklungskosten und der Aufwand, die durch separates Entwickeln der P1-Architektur und der P2-Architektur verbraucht werden, verringert werden.

### Kurzbeschreibunq der Zeichnungen

FIG. 1a ist ein schematisches Diagramm, das eine topologische Verbindungsstruktur eines Doppelmotor-Hybridantriebssystems nach dem Stand der Technik veranschaulicht, wobei das Hybridantriebssystem eine P1-Architektur und eine P3-Architektur aufweist; und FIG. 1b ist ein schematisches Diagramm, das eine topologische Verbindungsstruktur eines anderen Doppelmotor-Hybridantriebssystems nach dem Stand der Technik veranschaulicht, wobei das Hybridantriebssystem eine P2-Architektur und eine P3-Architektur aufweist.

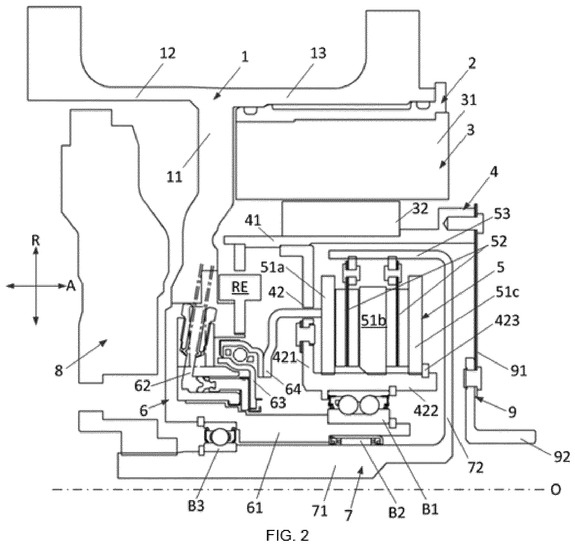

FIG. 2 ist ein schematisches Teilstrukturdiagramm, das die Implementierung eines Hybridantriebssystems mit einer P2-Architektur unter Verwendung eines modularen Getriebemechanismus gemäß der vorliegenden Erfindung veranschaulicht, wobei die Struktur des modularen Getriebemechanismus gemäß der vorliegenden Erfindung hauptsächlich in Form einer Schnittansicht veranschaulicht ist, und Schnittlinien jeder Komponente weggelassen sind.

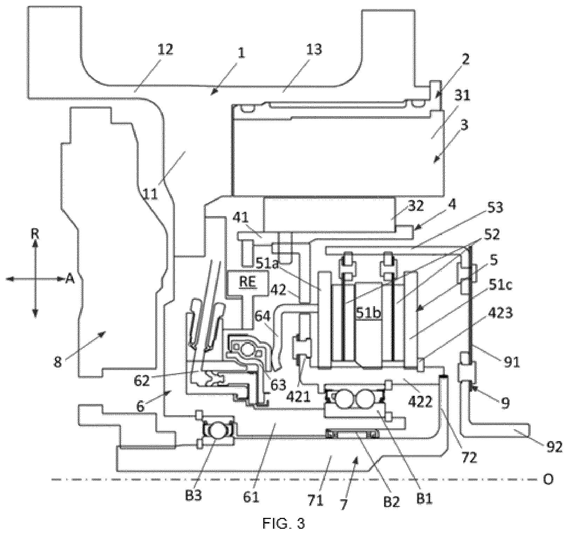

FIG. 3 ist ein schematisches Teilstrukturdiagramm, das die Implementierung eines Hybridantriebssystems mit einer P1-Architektur unter Verwendung eines modularen Getriebemechanismus gemäß der vorliegenden Erfindung veranschaulicht, wobei die Struktur des modularen Getriebemechanismus gemäß der vorliegenden Erfindung hauptsächlich in Form einer Schnittansicht veranschaulicht ist, und Schnittlinien jeder Komponente weggelassen sind.

### Ausführliche Beschreibung

Beispielhafte Ausführungsformen der vorliegenden Erfindung werden nachstehend unter Bezugnahme auf die Zeichnungen beschrieben. Es sollte beachtet werden, dass sich in der vorliegenden Erfindung "axiale(n) Richtung", "radiale(n) Richtung" und "Umfangsrichtung" auf eine axiale Richtung, eine radiale Richtung und eine Umfangsrichtung einer Motorausgangswelle beziehen. "Eine axiale Seite" bezieht sich auf die rechte Seite in. 1 und FIG. 3, "die andere axiale Seite" bezieht sich auf die linke Seite in FIG. 2 und FIG. 3, "radiale Außenseite" bezieht sich auf die Oberseite in FIG. 2 und FIG. 3 (das heißt die von einer Mittelachse O abgewandte Seite) und "radiale Innenseite" bezieht sich auf die untere Seite in FIG. 2 und FIG. 3 (das heißt die Seite nahe der Mittelachse O).

Ein Hybridantriebssystem mit einer P2-Architektur, das unter Verwendung eines modularen Getriebemechanismus für ein Hybridantriebssystem gemäß der vorliegenden Erfindung implementiert ist, wird nachstehend zuerst beschrieben.

### (Hybridantriebssystem mit der P2-Architektur)

Das Hybridantriebssystem mit der P2-Architektur gemäß der vorliegenden Erfindung umfasst einen modularen Getriebemechanismus für ein Hybridantriebssystem gemäß der vorliegenden Erfindung, einen Motor (nicht dargestellt), ein Getriebe (nicht dargestellt) und dergleichen.

Wie in FIG. 2 dargestellt, umfasst der modulare Getriebemechanismus für ein Hybridantriebssystem ein Gehäuse 1, einen Kühlmantel 2, einen Motor 3, eine Rotorträgeranordnung 4, eine Kupplung 5, einen konzentrischen Nehmerzylinder 6, eine Motorausgangswelle 7, einen Stoßdämpfer 8 und eine Ausgangsanordnung 9, die zusammengebaut sind, und alle vorstehend erwähnten Komponenten sind auf koaxiale Weise zusammengebaut.

Insbesondere ist das Gehäuse 1 des modularen Getriebemechanismus an einem Motorkörper oder einem Getriebegehäuse beispielsweise durch eine Schraube befestigt, sodass das Gehäuse 1 relativ zum Motor und dem Getriebe des Hybridantriebssystems befestigt ist.

Das Gehäuse 1 umfasst einen radialen Gehäuseabschnitt 11, einen ersten axialen Gehäuseabschnitt 12 und einen zweiten axialen Gehäuseabschnitt 13, die einstückig gebildet sind. Der radiale Gehäuseabschnitt 11 erstreckt sich ungefähr in einer radialen Richtung R, und der erste axiale Gehäuseabschnitt 12 und der zweite axiale Gehäuseabschnitt 13 erstrecken sich von einem radialen Außenseitenende des radialen Gehäuseabschnitts 11 in Richtung der anderen axialen Seite und einer axialen Seite in einer axialen Richtung A, sodass ein Raum, der vollständig vom ersten axialen Gehäuseabschnitt 12 und dem zweiten axialen Gehäuseabschnitt 13 umgeben ist, durch den radialen Gehäuseabschnitt 11 in zwei Teile unterteilt wird. Ferner befindet sich der Kühlmantel 2 auf einer radialen Innenseite des zweiten axialen Gehäuseabschnitts 13 und ist an dem zweiten axialen Gehäuseabschnitt 13 befestigt, und ein Strömungskanal für eine Kühlflüssigkeit (beispielsweise Wasser) ist zwischen dem Kühlmantel 2 und dem zweiten axialen Gehäuseabschnitt 13 gebildet, um den Kühlmantel 2 in die Lage zu versetzen, einen Stator 31 des Motors 3 zu kühlen. Darüber hinaus kann der Kühlmantel 2 auch den Stator 31 tragen.

Ferner umfasst der Motor 3 den Stator 31 und einen Rotor 32, der sich auf einer radialen Innenseite des Stators 31 befindet und in der Lage ist, sich relativ zum Stator 31 zu drehen. Der Stator 31 befindet sich auf einer radialen Innenseite des Kühlmantels 2 und ist an dem Kühlmantel 2 befestigt, und der Rotor 32 kann sich relativ zum Stator 31 in einem vom Stator 31 erzeugten Magnetfeld drehen, wodurch eine Antriebskraft/ein -drehmoment ausgegeben wird.

Ferner ist die Rotorträgeranordnung 4 fest mit dem Rotor 32 verbunden und befindet sich auf einer radialen Innenseite des Rotors 32, und die Rotorträgeranordnung 4 ist konfiguriert, um die Antriebskraft/das -drehmoment vom Rotor 32 zu übertragen, während sie den Rotor 32 von der radialen Innenseite trägt. Insbesondere umfasst die Rotorträgeranordnung 4 eine Rotorhalterung 41 und einen Rotorflansch 42, die aneinander befestigt sind.

Die Rotorhalterung 41 befindet sich auf der radialen Innenseite des Rotors 32. Die Rotorhalterung 41 ist direkt und fest mit dem Rotor 32 beispielsweise durch Presspassung verbunden, und die Rotorhalterung 41 ist konfiguriert, um den Rotor 32 zu tragen.

Der Rotorflansch 42 befindet sich auf einer radialen Innenseite der Rotorhalterung 41 und ist fest mit der Rotorhalterung 41 verbunden, sodass der Rotorflansch 42 die Rotorhalterung 41 und den Rotor 32 tragen kann. Der Rotorflansch 42 umfasst einen radialen Rotorflanschabschnitt 421, der sich in der radialen Richtung erstreckt, und einen axialen Rotorflanschabschnitt 422, der sich von einem radialen Innenseitenende des radialen Rotorflanschabschnitts 421 in Richtung einer axialen Seite erstreckt. Ein radiales Außenseitenende des radialen Rotorflanschabschnitts 421 ist fest mit der Rotorhalterung 41 verbunden. Der axiale Rotorflanschabschnitt 422 überlappt die Rotorhalterung 41 in der axialen Richtung A, sodass die Rotorhalterung 41, der axiale Rotorflanschabschnitt 421 und der axiale Rotorflanschabschnitt 422 einen Einbauraum für die Kupplung 5 umgeben und bilden.

Zusätzlich ist der axiale Abschnitt 422 des Rotorflansches ferner mit einem axialen Anschlag 423 versehen, der konfiguriert ist, um die Kupplung 5 axial zu positionieren. Ferner befindet sich die Kupplung 5 zwischen der Rotorhalterung 41 und dem Rotorflansch 42 und ist speziell in dem vorstehend erwähnten Einbauraum installiert, der von der Rotorhalterung 41, dem radialen Rotorflanschabschnitt 421 und dem axialen Rotorflanschabschnitt 422 umgeben und gebildet wird. Daher befindet sich die Kupplung 5 an einer axialen Seite des radialen Rotorflanschabschnitts 421 und an einer radialen Außenseite des axialen Rotorflanschabschnitts 422.

Die Kupplung 5 umfasst drei Druckplatten (eine erste Druckplatte 51a, die sich auf der anderen axialen Seite befindet, eine dritte Druckplatte 51c, die sich auf einer axialen Seite befindet, und eine zweite Druckplatte 51b, die sich zwischen der ersten Druckplatte 51a und der dritten Druckplatte 51c befindet) parallel zu-, und voneinander beabstandet, eine Vielzahl von Reibscheiben 52 und eine Eingangs-/Ausgangshalterung 53. Die Vielzahl von Reibscheiben 52 befindet sich zwischen den drei Druckplatten 51a, 51b und 51c. Vorzugsweise sind einige Reibscheiben 52 der Vielzahl von Reibscheiben 52 an den Druckplatten 51a, 51b und 51c befestigt, und die anderen Reibscheiben 52 sind an der Eingangs-/Ausgangshalterung 53 befestigt. Die drei Druckplatten 51a, 51b und 51c ermöglichen es der Vielzahl von Reibscheiben 52, in Antriebskopplung/-entkopplung miteinander zu stehen. Ferner sind die an der Eingangs-/Ausgangshalterung 53 befestigten Reibscheiben 52 vorzugsweise doppelseitige Reibscheiben. Die drei Druckplatten 51a, 51b und 51c stehen ferner in Umfangsrichtung immer in Antriebskopplung mit der Rotorträgeranordnung 4, insbesondere stehen die drei Druckplatten 51a, 51b und 51c durch Verzahnungen immer in Antriebskopplung mit dem axialen Rotorflanschabschnitt 422. Der auf dem axialen Rotorflanschabschnitt 422 angeordnete axiale Anschlag 423 befindet sich in einer Position auf einer axialen Seite der dritten Druckplatte 51c, die einer axialen Seite unter den drei Druckplatten 51a, 51b und 51c am nächsten ist, um die Kupplung 5 von einer axialen Seite axial zu begrenzen. Da die drei Druckplatten 51a, 51b und 51c in Antriebskopplung mit dem Rotorflansch 42 stehen, anstatt direkt mit der Rotorhalterung 41 verbunden zu sein, wird verhindert, dass von der Kupplung 5 erzeugte Wärme direkt auf den Rotor 32 übertragen wird, und somit ist der Einfluss der von der Kupplung 5 erzeugten Wärme auf den Rotor 32 sehr gering.

Außerdem ist unter den drei Druckplatten 51a, 51b und 51c die Masse der zweiten Druckplatte 51b viel größer als die der ersten Druckplatte 51a und die der dritten Druckplatte 51c, sodass die Wärmekapazität der ganzen Kupplung 5 verbessert wird. Ferner umfasst der konzentrische Nehmerzylinder 6 einen Zylinderkörper 61, der an einem radialen Innenseitenende des radialen Gehäuseabschnitts 11 befestigt ist, ein modulares Kupplungsbetätigungsglied 62, ein Ausrücklager 63 und einen Kolben 64. Ein Teil des Zylinderkörpers 61 des konzentrischen Nehmerzylinders 6 erstreckt sich vom radialen Innenseitenende des radialen Gehäuseabschnitts 11 zur radialen Innenseite ungefähr in der radialen Richtung R, und der andere Teil des Zylinderkörpers 61 erstreckt sich vom radialen Innenseitenende des vorstehend erwähnten Teils in Richtung einer axialen Seite in der axialen Richtung A, sodass der andere Teil des Zylinderkörpers 61 auf einer radialen Innenseite des axialen Rotorflanschabschnitts 422 angeordnet ist, und den axialen Rotorflanschabschnitt 422 in der Achsrichtung A überlappt.

Das modulare Kupplungsbetätigungsglied 62 ist in dem Gehäuse 1 angeordnet, und durch die Steuerung von Hochdrucköl ermöglicht das modulare Kupplungsbetätigungsglied 62 dem Ausrücklager 63, einen axialen Druck auf den Kolben 64 auszuüben oder aufzuheben, um das Ineingriffgehen/Außereingriffgehen der Kupplung 5 zu steuern. Der modulare Kupplungsbetätigungsglied 62 weist die gleiche Struktur wie ähnliche Mechanismen im Stand der Technik auf, und wird somit in der vorliegenden Beschreibung nicht im Detail beschrieben.

Ein Innenring des Ausrücklagers 63 liegt in der axialen Richtung A am modularen Kupplungsbetätigungsglied 62 an, und ein Außenring des Ausrücklagers 63 liegt in axialer Richtung A an dem Kolben 64 an, sodass das Ausrücklager 63 den axialen Druck vom modularen Kupplungsbetätigungsglied 62 erfolgreich zum Kolben 64 übertragen kann.

Ein Teil des Kolbens 64 dient dazu, gegen den Außenring des Ausrücklagers 63 anzustoßen, und der andere Teil davon geht durch ein Durchgangsloch, das in dem radialen Rotorflanschabschnitt 421 gebildet ist, und drückt von der anderen axialen Seite gegen die erste Druckplatte 51a, sodass der Kolben 64 mit dem axialen Anschlag 423 zusammenwirken kann, der an dem axialen Rohrflanschabschnitt 422 angeordnet ist, um die Kupplung 5 axial zu begrenzen.

Wenn das Ausrücklager 63 durch das modulare Kupplungsbetätigungsglied 62 angetrieben wird, um den axialen Druck auf den Kolben 64 in Richtung einer axialen Seite auszuüben, übt der Kolben 64 auf diese Weise Druck auf die erste Druckplatte 51a in Richtung einer axialen Seite aus, bis die Vielzahl von Reibscheiben 52 zwischen den drei Druckplatten 51a, 51b und 51c vollständig miteinander in Eingriff steht, sodass die Kupplung 5 in Eingriff steht; wenn das Ausrücklager 63 den vorstehend erwähnten axialen Druck aufhebt, der auf den Kolben 64 ausgeübt wird, können die Reibscheiben 52 zwischen den drei Druckplatten 51a, 51b und 51c unter der Wirkung beispielsweise einer Rückstellfeder (nicht dargestellt) außer Eingriff gebracht werden, sodass die Kupplung 5 außer Eingriff gebracht wird.

Ferner befindet sich eine Motorausgangswelle 7 auf radialen Innenseiten sowohl des konzentrischen Nehmerzylinders 6 als auch der Rotorträgeranordnung 4. Die Motorausgangswelle 7 umfasst einen Wellenabschnitt 71, der sich linear in der axialen Richtung A erstreckt, und einen Mittelflansch 72, der an einem axialen Ende des Wellenabschnitts 71 befestigt ist, und der Mittelflansch 72 erstreckt sich in der radialen Richtung R. Ein radiales Außenseitenende von der Mittelflansch 72 ist an der Eingangs-/Ausgangshalterung 53 der Kupplung 5 befestigt.

Ferner ist der Stoßdämpfer 8 am anderen axialen Ende des Wellenabschnitts 71 der Motorausgangswelle 7 befestigt, und der Stoßdämpfer 8 befindet sich auf der anderen axialen Seite des radialen Gehäuseabschnitts 11 und die andere axiale Seite des konzentrischen Nehmerzylinders 6 und befindet sich auf einer radialen Innenseite des ersten axialen Gehäuseabschnitts 12; und der Stoßdämpfer 8 ist konfiguriert, um Torsionsschwingungen des Motors abzuschwächen, sodass eine Antriebskraft/ein - drehmoment vom Motor so gleichmäßig wie möglich auf die Motorausgangswelle 7 übertragen werden kann.

Ferner umfasst die Ausgangsanordnung 9 eine flexible Platte 91 und einen Nabenkern 92 der flexiblen Platte, die miteinander verbunden sind. Ein radiales Außenseitenende der flexiblen Platte 91 ist an der Rotorhalterung 41 beispielsweise durch eine Schraube befestigt, und ein radiales Innenseitenende der flexiblen Platte 91 ist an dem Nabenkern 92 der flexiblen Platte befestigt. Der Nabenkern 92 der flexiblen Platte ist konfiguriert, um mit einer Eingangswelle des Getriebes in Antriebskopplung zu stehen.

Um sicherzustellen, dass der Rotorflansch 42 durch den Zylinderkörper 61 relativ zum Zylinderkörper 61 des konzentrischen Nehmerzylinders 6 drehbar gelagert ist, umfasst der modulare Getriebemechanismus außerdem ein Lager (zweireihiges Kugellager) B1, das sich zwischen den axialen Rotorflanschabschnitt 422 und dem Zylinderkörper 61 befindet. Um sicherzustellen, dass der Zylinderkörper 61 des konzentrischen Nehmerzylinders 6 von der Motorausgangswelle 7 relativ zur Motorausgangswelle 7 drehbar getragen wird, umfasst der modulare Getriebemechanismus zwei Lager (ein einreihiges Rillenkugellager) und ein Nadellager) B3 und B2, die sich zwischen dem Zylinderkörper 61 und der Motorausgangswelle 7 befinden. Außenringe und Innenringe der vorstehend genannten Lager sind alle durch entsprechende Strukturen axial begrenzt.

Auf diese Weise steht in dem Hybridantriebssystem mit der in FIG. 2 dargestellten P2-Architektur,
einerseits die Motorausgangswelle 7 des modularen Getriebemechanismus in Antriebskopplung mit einer Kurbelwelle des Motors, sodass die Antriebskraft/das - drehmoment des Motors auf die Motorausgangswelle 7 übertragen werden kann und die Motorausgangswelle 7 ist ferner fest mit der Eingangs-/Ausgangshalterung 53 der Kupplung 5 verbunden, sodass die Antriebskraft/das -drehmoment von der Motorausgangswelle 7 direkt auf die Rotorträgeranordnung 4 übertragen werden kann, wenn die Kupplung 5 in Eingriff steht; und
andererseits ist die Rotorträgeranordnung 4 fest mit dem Rotor 32 verbunden, sodass die Antriebskraft/das -drehmoment vom Rotor 32 des Motors 3 direkt auf die Rotorträgeranordnung 4 übertragen werden kann, sodass die Antriebskraft/das - drehmoment von der Motorausgangswelle 7 und die Antriebskraft/das -drehmoment vom Rotor 32 des Motors 3 an der Rotorträgeranordnung 4 kombiniert werden können. Ferner steht die Rotorträgeranordnung 4 des modularen Getriebemechanismus mittels der Ausgangsanordnung 9 in Antriebskopplung mit der Eingangswelle des Getriebes. Daher kann die kombinierte Antriebskraft/das - drehmoment mittels der Ausgangsanordnung 9 auf die Eingangswelle des Getriebes übertragen werden.

Genauer gesagt, in dem Hybridantriebssystem mit der in FIG. 2 dargestellten P2-Architektur ist ein Übertragungsweg der Antriebskraft/des -drehmoments vom Motor wie folgt: die Motorausgangswelle 7 → die Eingangs-/Ausgangshalterung 53 der Kupplung 5 → die Reibscheiben 52 der Kupplung 5 → die Druckplatten 51a, 51b und 51c der Kupplung 5 → der Rotorflansch 42 → die Rotorhalterung 41 → die flexible Platte 91 → der Nabenkern 92 der flexiblen Platte → die Eingangswelle des Getriebes; und ein Übertragungsweg der Antriebskraft/des -drehmoments vom Motor 3 ist wie folgt: der Rotor 32 → die Rotorhalterung 41 → die flexible Platte 91 → der Nabenkern 92 der flexiblen Platte → die Eingangswelle des Getriebes.

Das Hybridantriebssystem mit der P2-Architektur, das unter Verwendung des modularen Getriebemechanismus für ein Hybridantriebssystem gemäß der vorliegenden Erfindung implementiert ist, ist vorstehend beschrieben, und ein Hybridantriebssystem mit einer P1-Architektur, das unter Verwendung des modularen Getriebemechanismus für ein Hybridantriebssystem gemäß der vorliegenden Erfindung implementiert ist, wird nachstehend beschrieben.

### (Hybridantriebssystem mit der P1-Architektur)

Das Hybridantriebssystem mit der P1-Architektur umfasst einen modularen Getriebemechanismus für ein Hybridantriebssystem gemäß der vorliegenden Erfindung, einen Motor (nicht dargestelllt), ein Getriebe (nicht dargestellt) und dergleichen, wobei der modulare Getriebemechanismus für ein Hybridantriebssystem gemäß der vorliegenden Erfindung, das in FIG. 3 dargestellt ist, im Wesentlichen die gleiche Grundstruktur wie der modulare Getriebemechanismus für ein Hybridantriebssystem gemäß der vorliegenden Erfindung aufweist, der in FIG. 2 dargestellt ist. Um das Hybridantriebssystem mit der P1-Architektur zu implementieren, wird nur eine Verbindungsbeziehung zwischen einigen Komponenten geändert.

Insbesondere wie in FIG. 3 dargestellt, ist der Mittelflansch 72 der Motorausgangswelle 7 fest mit dem axialen Rotorflanschabschnitt 422 der Rotorträgeranordnung 4 verbunden, anstatt direkt und fest mit der Eingangs-/Ausgangshalterung 53 der Kupplung 5 verbunden zu sein; außerdem ist die Ausgangsanordnung 9 fest mit der Eingangs-/Ausgangshalterung 53 der Kupplung 5 verbunden, anstatt direkt und fest mit der Rotorträgeranordnung 4 verbunden zu sein. Auf diese Weise kann die Antriebskraft/das -drehmoment von der Motorausgangswelle 7 direkt auf die Rotorträgeranordnung 4 übertragen werden, ohne die Kupplung 5 zu passieren, die Antriebskraft/das -drehmoment vom Rotor 32 und die Antriebskraft/das -drehmoment von der Motorausgangswelle 7 werden an der Rotorträgeranordnung 4 kombiniert, und dann wird die kombinierte Antriebskraft/das - drehmoment über das Ineingriffbringen der Kupplung 5 auf die Ausgangsanordnung 9 übertragen.

Genauer gesagt, in dem Hybridantriebssystem mit der P1-Architektur, das in FIG. 3 dargestellt ist, ist der Übertragungsweg der Antriebskraft/des -drehmoments vom Motor wie folgt: die Motorausgangswelle 7 → der Rotorflansch 42 → die Druckplatten 51a, 51b und 51c der Kupplung 5 → die Reibscheiben 52 der Kupplung 5 → die Eingangs-/Ausgangshalterung 53 der Kupplung 5 → die flexible Platte 91 → der Nabenkern 92 der flexiblen Platte → die Eingangswelle des Getriebes; und der Übertragungsweg der Antriebskraft/des -drehmoments vom Motor 3 ist wie folgt: der Rotor 32 → die Rotorhalterung 41 → der Rotorflansch 42 → die Druckplatten 51a, 51b und 51c der Kupplung 5 → die Reibscheiben 52 von der Kupplung 5 → die Eingangs-/Ausgangshalterung 53 der Kupplung 5 → die flexible Scheibe 91 → der Nabenkern 92 der flexiblen Scheibe → die Eingangswelle des Getriebes.

Es ist zu erkennen, dass aufgrund der Annahme des modularen Getriebemechanismus für ein Hybridantriebssystem gemäß der vorliegenden Erfindung das Hybridantriebssystem mit nur wenigen Änderungen in der Struktur zwischen der P1-Architektur und der P2-Architektur umgewandelt werden kann. Selbstverständlich ist die vorliegende Erfindung nicht auf die vorstehend erwähnten Ausführungsformen beschränkt, und Fachleute auf dem Gebiet der Technik können verschiedene Modifikationen an den vorstehend erwähnten Ausführungsformen der vorliegenden Erfindung vornehmen, ohne angesichts der Lehre der vorliegenden Erfindung vom Schutzumfang der vorliegenden Erfindung abzuweichen.
(i) In der vorstehend erwähnten Beschreibung wird nur ein Betriebsmodus beschrieben, in dem der Verbrennungsmotor und der Motor jedes Hybridantriebssystems gemeinsam zum Antrieb verwendet werden. Das Laden einer Batterie durch den Motor unter Verwendung der Antriebskraft/des -drehmoments des Motors kann durch geeignetes Steuern des Ineingriffbringens/Außereingriffbringens der Kupplung implementiert werden, was hierin nicht weiter beschrieben wird.
(ii) Da die Kupplung 5 des modularen Getriebemechanismus für ein Hybridantriebssystem gemäß der vorliegenden Erfindung auf der radialen Innenseite des Motors 3 angeordnet ist, was bewirkt, dass sich der Motor 3 und die Kupplung 5 in der axialen Richtung A überlappen, reduziert diese Anordnung eine seitliche Abmessung des gesamten Hybridantriebssystems im Vergleich zu einem Modus der Seite-an-Seite-Konfiguration der Kupplung 5 und des Motors 3 im Stand der Technik.
(iii) Obwohl vorstehend nicht beschrieben, kann der modulare Getriebemechanismus für ein Hybridantriebssystem gemäß der vorliegenden Erfindung ferner mit einem Drehzahlsensor RE versehen sein. Der Drehzahlsensor RE kann auf dem Zylinderkörper 61 des konzentrischen Nehmerzylinders 6 und der Rotorhalterung 41 angeordnet und konfiguriert sein, um die Drehzahl des Rotors 32 zu erfassen.
(iv) Obwohl vorstehend nicht beschrieben, kann die Kupplung 5 des modularen Getriebemechanismus für ein Hybridantriebssystem gemäß der vorliegenden Erfindung verschiedene Parameter der Kupplung basierend auf tatsächlichen Bedürfnissen (Drehmomentkapazität und Wärmekapazität der Kupplung 5) einstellen.
(v) Obwohl vorstehend nicht beschrieben, beträgt in einem spezifischen, aber nicht einschränkenden Beispiel ein Außendurchmesser des Stators 31 277 mm, eine axiale Abmessung des Stators 31 beträgt ungefähr 80 mm und ein Innendurchmesser des Rotors 32 beträgt 182 mm.
(vi) In der vorliegenden Erfindung können vorhandene Produkte als konzentrischer Nehmerzylinder 6 (modulares Kupplungsbetätigungsglied 62), Stoßdämpfer 8 und Ausgangsanordnung 9 verwendet werden, um die Kosten zu reduzieren.

### LISTE DER BEZUGSZZAHLEN

- ICE: Verbrennungsmotor
- EM1: erster Motor
- EM2: zweiter Motor
- K0: Kupplung
- DHT: Getriebe
- 1: Gehäuse
- 11: radialer Gehäuseabschnitt
- 12: erster axialer Gehäuseabschnitt
- 13: zweiter axialer Gehäuseabschnitt
- 2: Kühlmantel
- 3: Motor
- 31: Stator
- 32: Rotor
- 4: Rotorträgeranordnung
- 41: Rotorhalterung
- 42: Rotorflansch
- 421: radialer Rotorflanschabschnitt
- 422: axialer Rotorflanschabschnitt
- 423: axialer Anschlag
- 5: Kupplung
- 51a: erste Druckplatte
- 51b: zweite Druckplatte
- 51c: dritte Druckplatte
- 52: Reibscheiben
- 53: Eingangs-/Ausgangshalterung
- 6: konzentrischer Nehmerzylinder
- 61: Zylinderkörper
- 62: modulares Kupplungsbetätigungsglied
- 63: Ausrücklager
- 64: Kolben
- 7: Motorausgangswelle
- 71: Wellenabschnitt
- 72: Mittelflansch
- 8: Stoßdämpfer
- 9: Ausgangsanordnung
- 91: flexible Platte
- 92: Nabenkern einer flexiblen Platte
- RE: Drehzahlsensor
- A: axiale Richtung
- R: radiale Richtung
- O: Mittelachse

## Patentansprüche

1. Modularer Getriebemechanismus für ein Hybridantriebssystem, umfassend:
einen Motor (3), umfassend einen Stator (31) und einen Rotor (32), der sich auf einer radialen Innenseite des Stators (31) befindet und in der Lage ist, sich relativ zum Stator (31) zu drehen;
eine Rotorträgeranordnung (4), die fest mit dem Rotor (32) verbunden ist und sich auf einer radialen Innenseite des Rotors (32) befindet;
eine Kupplung (5), die sich auf der radialen Innenseite des Rotors (32) befindet und eine Vielzahl von Druckplatten (51a, 51b, 51c), eine Vielzahl von Reibscheiben (52) und eine Eingangs-/Ausgangshalterung (53) umfasst, wobei die Vielzahl von Druckplatten (51a, 51b, 51c) in der Lage ist, die Vielzahl von Reibscheiben (52) in Eingriff zu nehmen, um die Rotorträgeranordnung (4) in die Lage zu versetzen, in Antriebskopplung mit der Eingangs-/Ausgangshalterung (53) zu stehen;
einen konzentrischen Nehmerzylinder (6), der relativ zum Stator (31) integral befestigt ist und einen Kolben (64) umfasst, wobei der Kolben (64) in der Lage ist, Druck auf die Druckplatte (51a) auszuüben, um die Vielzahl von Reibscheiben (52) in die Lage zu versetzen, miteinander in Eingriff zu stehen;
eine Motorausgangswelle (7), die sich auf radialen Innenseiten sowohl des konzentrischen Nehmerzylinders (6) als auch der Rotorträgeranordnung (4) befindet; und
eine Ausgangsanordnung (9),
wobei die Motorausgangswelle (7) mit der Eingangs-/Ausgangshalterung (53) verbunden ist und die Ausgangsanordnung (9) mit der Rotorträgeranordnung (4) verbunden ist; oder
die Motorausgangswelle (7) mit der Rotorträgeranordnung (4) verbunden ist und die Ausgangsanordnung (9) mit der Eingangs-/Ausgangshalterung (53) verbunden ist.

2. Modularer Getriebemechanismus für ein Hybridantriebssystem nach Anspruch 1, wobei die Rotorträgeranordnung (4) eine Rotorhalterung (41) und einen Rotorflansch (42) umfasst, die Rotorhalterung (41) fest mit dem Rotor (32) verbunden ist, der Rotorflansch (42) sich auf einer radialen Innenseite der Rotorhalterung (41) befindet und mit der Rotorhalterung (41) fest verbunden ist und die Kupplung (5) sich zwischen der Rotorhalterung (41) und dem Rotorflansch (42) befindet.

3. Modularer Getriebemechanismus für ein Hybridantriebssystem nach Anspruch 2, wobei der Rotorflansch (42) einen radialen Rotorflanschabschnitt (421), der sich in einer radialen Richtung (R) erstreckt, und einen axialen Rotorflanschabschnitt (422) umfasst, der sich von einem radialen Innenseitenende des radialen Rotorflanschschnitts (421) in Richtung einer axialen Seite erstreckt, die Kupplung (5) sich auf einer radialen Außenseite des radialen Rotorflanschabschnitts (422) befindet und die Vielzahl von Druckplatten (51a, 51b, 51c) in einer Umfangsrichtung mit dem axialen Rotorflanschabschnitt (422) in Antriebskopplung steht.

4. Modularer Getriebemechanismus für ein Hybridantriebssystem nach Anspruch 3, wobei der axiale Rotorflanschabschnitt (422) ferner mit einem axialen Anschlag (423) versehen ist und der axiale Anschlag (423) sich in einer Position auf einer axialen Seite der Druckplatte (51c) befindet, die einer axialen Seite unter der Vielzahl von Druckplatten (51a, 51b, 51c) am nächsten liegt.

5. Modularer Getriebemechanismus für ein Hybridantriebssystem nach einem der Ansprüche 1 bis 4, wobei die Masse von mindestens einer Druckplatte (51b), die sich in der Mitte der Vielzahl von Druckplatten (51a, 51b, 51c) befindet, größer als die der anderen Druckplatten (51a, 51c) ist.

6. Modularer Getriebemechanismus für ein Hybridantriebssystem nach einem der Ansprüche 2 bis 5, wobei ein Teil eines Zylinderkörpers (61) des konzentrischen Nehmerzylinders (6) sich auf der radialen Innenseite des axialen Rotorflanschabschnitts (422) befindet und der modulare Getriebemechanismus mindestens ein Lager (B1) umfasst, das sich zwischen dem axialen Rotorflanschabschnitt (422) und dem Zylinderkörper (61) befindet, und mindestens zwei Lager (B2, B3) sich zwischen dem Zylinderkörper (61) und der Motorausgangswelle (7) befinden.

7. Modularer Getriebemechanismus für ein Hybridantriebssystem nach einem der Ansprüche 1 bis 6, wobei der modulare Getriebemechanismus ferner ein Gehäuse (1) umfasst, wobei das Gehäuse (1) relativ zu einem Motor des Hybridantriebssystems befestigt ist,
das Gehäuse (1) einen sich in radialer Richtung erstreckenden radialen Gehäuseabschnitt (11) und einen ersten axialen Gehäuseabschnitt (12) und einen zweiten axialen Gehäuseabschnitt (13) umfasst, der sich von einem radialen Außenseitenende des radialen Gehäuseabschnitts (11) jeweils in Richtung der anderen axialen Seite bzw. einer axialen Seite erstreckt, und
der Zylinderkörper (61) des konzentrischen Nehmerzylinders (6) auf dem radialen Gehäuseabschnitt (11) befestigt ist und der Motor (3) sich auf einer radialen Innenseite des zweiten axialen Gehäuseabschnitts (13) befindet.

8. Modularer Getriebemechanismus für ein Hybridantriebssystem nach Anspruch 7, wobei der modulare Getriebemechanismus ferner einen Kühlmantel (2) umfasst, der Kühlmantel (2) sich auf der radialen Innenseite des zweiten axialen Gehäuseabschnitts (13) befindet und am zweiten axialen Gehäuseabschnitt (13) befestigt ist und der Stator (31) sich auf einer radialen Innenseite des Kühlmantels (2) befindet und am Kühlmantel (2) befestigt ist.

9. Hybridantriebssystem, umfassend:
einen Motor in Antriebskopplung mit einer Motorausgangswelle (7);
ein Getriebe, umfassend eine Getriebeeingangswelle; und
einen modularen Getriebemechanismus für ein Hybridantriebssystem nach einem der Ansprüche 1 bis 8,
wobei die Motorausgangswelle (7) fest mit der Eingangs-/Ausgangshalterung (53) verbunden ist und die Rotorträgeranordnung (4) mittels der Ausgangsanordnung (9) mit der Getriebeeingangswelle in Antriebskopplung steht.

10. Hybridantriebssystem, umfassend:
einen Motor in Antriebskopplung mit einer Motorausgangswelle (7);
ein Getriebe, umfassend eine Getriebeeingangswelle; und
einen modularen Getriebemechanismus für ein Hybridantriebssystem nach einem der Ansprüche 1 bis 8,
wobei die Motorausgangswelle (7) fest mit der Rotorträgeranordnung (4) verbunden ist und die Eingangs-/Ausgangshalterung (53) mittels der Ausgangsanordnung (9) mit der Getriebeeingangswelle in Antriebskopplung steht.
